# EUROPEAN PATENT APPLICATION

(11) **EP 3 871 916 A1**
(43) Date of publication of application: **01.09.2021**
(21) Application number: 21153685.9
(22) Date of filing: 27.01.2021
(51) Int. Cl.: B60K 26/04

(54) **ACCELERATOR DEVICE OF VEHICLE**

(30) Priority: 28.02.2020 JP 2020032895
(71) Applicant: Kabushiki Kaisha Toyota Jidoshokki, Kariya-shi, Aichi 448-8671 (JP)
(72) Inventor: SUMIHARA, Makoto, Kariya-shi,, Aichi 448-8671 (JP); HIRANO, Takeshi, Kariya-shi,, Aichi 448-8671 (JP)
(74) Representative: TBK

(57) **Abstract**

An accelerator device (1, 30, 40) of a vehicle includes a stepping motor (10), an injection pump (3) for injecting fuel supplied to an engine (6), an open-close lever (4, 43) for adjusting an injection amount of the injection pump (3), a power transmission path (P) through which power is transmitted from the stepping motor (10) to the open-close lever (4, 43), and an overload interruption part (21, 31, 41) for interrupting an overload (F) to be applied to the stepping motor (10) via the power transmission path (P).

## Description

The present invention relates to an accelerator device of a vehicle, such as an automobile.

### BACKGROUND ART

For example, an engine of an automobile operates a stepping motor depending on a position of an accelerator (a pressing amount of an accelerator) to adjust a position of a lever of an injection pump for fuel injection (Automatic Speed Control (ASC)). For example, a transmission rod is disposed between the stepping motor and the lever of the injection pump to coordinate the motion of the stepping motor and the motion of the injection pump. The rotation output of the stepping motor is transmitted to the open-close lever of the injection pump via the transmission rod to adjust the injection amount of the injection pump.

An operation end on the open side and an operation end on the close side of the stepping motor are each detected by a sensor. When either sensor operates, the stepping motor is stopped. When the stepping motor is stopped on the close side, the open-close lever of the injection pump is placed at the fully-closed position by an urging force of a spring. In contrast, the maximally-open position of the open-close lever of the injection pump is determined by the contact of the open-close lever with a stopper.

Such an accelerator device may have an error, such as an assembly error. The error may cause a situation where the open-close lever of the injection pump is in contract with the stopper for fully open and the sensor of the stepping motor on the open side is not in operation. In this situation, the stepping motor further rotates toward the open side while the transmission rod is not displaced. As a result, the stepping motor causes a mechanical slip (loss of synchronism) within the motor. Although Japanese Patent Application Publication No. 2005-133574 discloses motor control for correcting wrong step after the loss of synchronism, it is inherently desirable to avoid the loss of synchronism.

### SUMMARY

In accordance with an aspect of the present invention, there is provided an accelerator device of a vehicle that includes a stepping motor, an injection pump for injecting fuel supplied to an engine, and an open-close lever for adjusting an injection amount of the injection pump. The accelerator device further includes a power transmission path through which power is transmitted from the stepping motor to the open-close lever, and an overload interruption part for interrupting an overload to be applied to the stepping motor via the power transmission path.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the embodiment together with the accompanying drawings in which:
FIG. 1 is a schematic view of an accelerator device according to a first embodiment. FIG. 1 illustrates an open-close lever placed at a fully-closed position and at a fully-opened position that are respectively indicated by a solid line and by a dotted line;
FIG. 2 is a schematic view of the accelerator device according to the first embodiment. FIG. 2 illustrates a situation where a stepping motor further rotates toward the open side after the open-close lever comes into contact with a stopper on the open side;
FIG. 3 is a schematic view of an accelerator device according to a second embodiment. FIG. 3 illustrates a situation where an open-close lever comes into contact with a stopper on the open side;
FIG. 4 is a schematic view of the accelerator device according to the second embodiment. FIG. 4 illustrates a situation where a stepping motor further rotates toward the open side after the open-close lever comes into contact with the stopper on the open side;
FIG. 5 is a schematic view of an accelerator device according to a third embodiment. FIG. 5 illustrates a situation where an open-close lever comes into contact with a stopper on the open side;
FIG. 6 is a schematic view of the accelerator device according to the third embodiment. FIG. 6 illustrates a situation where a stepping motor further rotates toward the open side after the open-close lever comes into contact with the stopper on the open side; and
FIG. 7 is a side view of an overload interruption part according to the third embodiment when the overload interruption part is viewed as indicated by the arrow VII in FIG. 6.

### DETAILED DESCRIPTION OF THE EMBODIMENTS

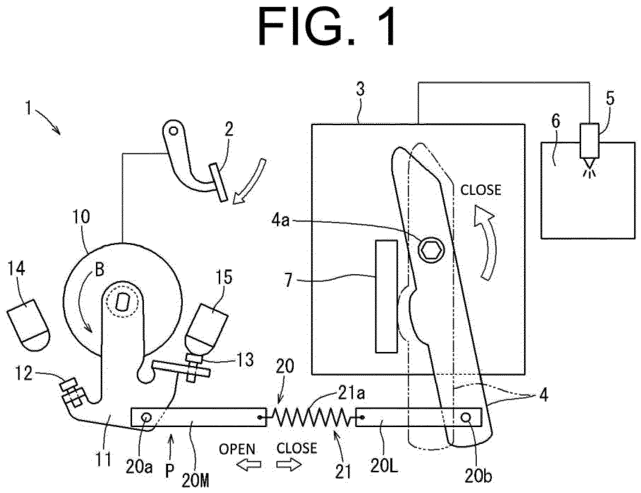

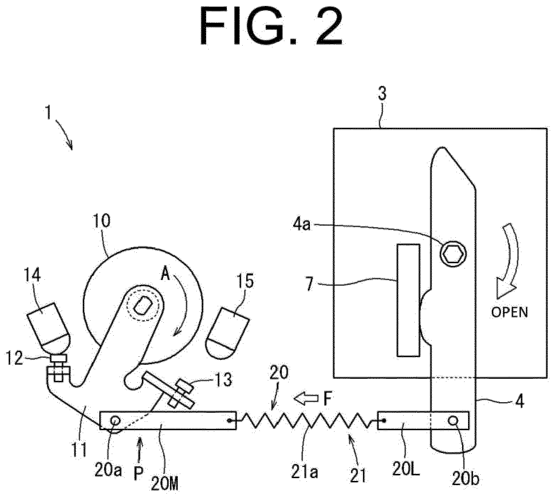

Embodiments of the present invention will be described with reference to FIGS. 1 to 7. FIGS. 1 and 2 illustrate an accelerator device 1 according to a first embodiment. The accelerator device 1 of a vehicle includes a stepping motor 10, an injection pump 3 for injecting fuel supplied to an engine 6, an open-close lever 4 for adjusting an injection amount of the injection pump 3, a power transmission path P through which power is transmitted from the stepping motor 10 to the open-close lever 4, and an overload interruption part 21 for interrupting overload to be applied to the stepping motor 10 via the power transmission path P. In the accelerator device 1 of a vehicle, the stepping motor 10 rotates depending on a pressing amount of an accelerator pedal 2. The stepping motor 10 has an output shaft to which an output bracket 11 is attached. The output bracket 11 is fixed to the output shaft of the stepping motor 10. The output bracket 11 rotates between an open side and a close side within a certain angular range.

The output bracket 11 includes two stoppers, such as an open-side stopper 12 and a close-side stopper 13. When the stepping motor 10 rotates in a direction A (an open direction) indicated by an arrow A in FIG. 2, the output bracket 11 rotates toward the open side (in the clockwise direction in FIG. 2). The output bracket 11 includes the open-side stopper 12 that is attached to an open-side end portion of the output bracket 11. When the stepping motor 10 rotates in a direction B (a close direction) indicated by an arrow B in FIG. 1, the output bracket 11 rotates toward the close side (in the counterclockwise direction in FIG. 1). The output bracket 11 includes the close-side stopper 13 that is attached to a close-side end portion of the output bracket 11.

An open-side sensor 14 is disposed in front of the open-side stopper 12 in the open-side rotation direction of the output bracket 11. A close-side sensor 15 is disposed in front of the close-side stopper 13 in the close-side rotation direction of the output bracket 11. When the open-side sensor 14 detects the open-side stopper 12 in response to the rotation of the output bracket 11 in the direction A, the stepping motor 10 stops. When the close-side sensor 15 detects the close-side stopper 13 in response to the rotation of the output bracket 11 in the direction B, the stepping motor 10 stops.

The open-close lever 4 of the injection pump 3 rotates toward the open side or the close side in response to rotation output of the stepping motor 10. The injection pump 3 injects fuel to the engine 6 via an injection nozzle 5 depending on a rotation position of the open-close lever 4. The injection amount of the fuel is adjusted according to the rotation position of the open-close lever 4. The open-close lever 4 is rotatably supported by the injection pump 3 via a lever shaft 4a. The open-close lever 4 rotates to a fully-closed position in the counterclockwise direction as indicated by the solid line in FIG. 1. The open-close lever 4 is urged by a spring (not illustrated) toward the fully-closed position.

The open-close lever 4 rotates in the clockwise direction in FIG. 2 to open from the fully-closed position indicated by the solid line in FIG. 1. The open-close lever 4 comes into contact with a full-open stopper 7 at a fully-opened position indicated by the dotted line in FIG. 1. The full-open stopper 7 physically prevents the open-close lever 4 from further rotating toward the open-side.

The output bracket 11 adjacent to the stepping motor 10 is connected to the open-close lever 4 via a single transmission rod 20. One end of the transmission rod 20 adjacent to the stepping motor 10 is rotatably connected to the output bracket 11 via a support shaft 20a. The other end of the transmission rod 20 adjacent to the open-close lever 4 is rotatably connected to one end of the open-close lever 4 via a support shaft 20b. Accordingly, the transmission rod 20 only receives axial force and does not receive bending moment.

The transmission rod 20 is a part of the power transmission path P through which the rotation output of the stepping motor 10 is transmitted to the open-close lever 4. The rotation output of the stepping motor 10 is transmitted to the open-close lever 4 via the transmission rod 20. The transmission rod 20 includes the overload interruption part 21 at a predetermined position between the opposite ends of the transmission rod 20. In the first embodiment, the overload interruption part 21 includes an extension spring 21a that serves as an elastic member. The single transmission rod 20 includes a motor-side rod 20M and a lever-side rod 20L that are connected to each other via the overload interruption part 21 to form the single transmission rod 20.

When the axial load applied to the transmission rod 20 is equal to or less than a predetermined load, the power is transmitted to the open-close lever 4 via the overload interruption part 21 since the extension spring 21a is not stretched. Accordingly, the rotation output of the stepping motor 10 is transmitted to the open-close lever 4 via the transmission rod 20.

In contrast, when the axial load applied to the transmission rod 20 is greater than the predetermined load of the overload interruption part 21, in other words, an overload F is applied to the transmission rod 20, the overload interruption part 21 (the extension spring 21a) operates. In this situation, as illustrated in FIG. 2, the extension spring 21a is stretched, i.e., elastically deformable under the overload F against its elastomeric force (urging force). This causes the motor-side rod 20M and the lever-side rod 20L to move away from each other along the axial direction of the transmission rod 20.

Accordingly, in the first embodiment, the elastomeric force of the extension spring 21a corresponds to the predetermined load that serves as the reference load for blocking the power transmission path P. The predetermined load for the blocking is set to a load that prevents the loss of synchronism of the stepping motor 10. The embodiment adopts the extension spring 21a that satisfies this elastomeric force condition.

This configuration blocks the power transmission path P between the stepping motor 10 and the open-close lever 4. The blocking of the power transmission path P prevents the overload F from being applied to the stepping motor 10 and the open-close lever 4.

The accelerator device 1 according to the first embodiment includes the overload interruption part 21 that is disposed in the power transmission path P between the stepping motor 10 and the open-close lever 4. The overload interruption part 21 interrupts the overload F passing through the power transmission path P. This prevents the overload F from being applied to the stepping motor 10 and the open-close lever 4. The interruption of the overload F to be applied to the stepping motor 10 prevents the loss of synchronism of the stepping motor 10.

For example, even if the stepping motor 10 rotates toward the open side after the open-close lever 4 comes in contact with the full-open stopper 7, the extension spring 21a is stretched to interrupt the overload F. This prevents the loss of synchronism of the stepping motor 10. The stepping motor 10 is rotated in the direction B (close side) by the release of the accelerator pedal 2. The motor-side rod 20M relatively moves toward the close side to cause the return of the extension spring 21a. This allows the automatic restoration of the overload interruption part 21 to its original state. Along with the automatic restoration of the overload interruption part 21, the open-close lever 4 is returned to a close position by the spring force of the spring (not illustrated).

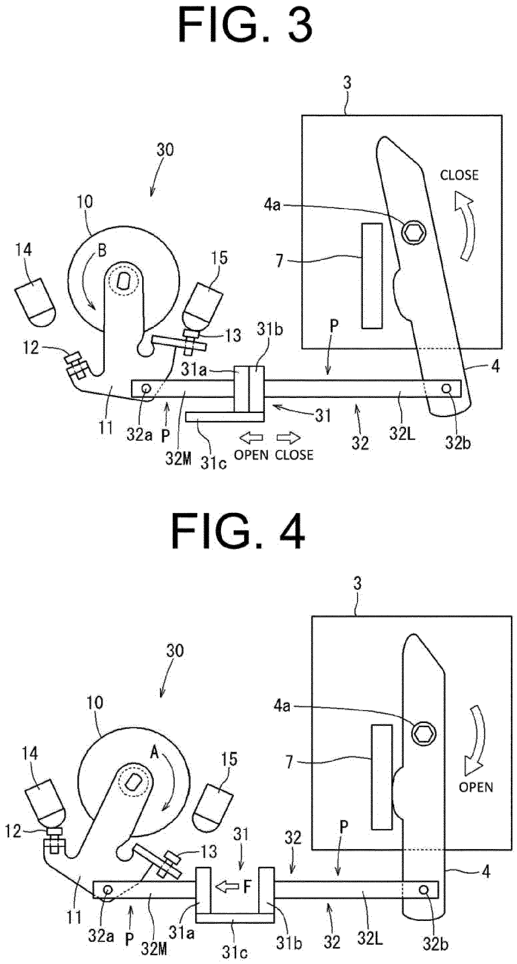

The aforementioned first embodiment can be modified variously. FIGS. 3 and 4 illustrate an accelerator device 30 according to a second embodiment. The second embodiment adopts a magnetic overload interruption part 31 instead of the spring overload interruption part 21 of the first embodiment. The same numerical references are used for members and configurations that are not modified from the first embodiment, and the explanation of such members and configurations will be omitted.

As illustrated in FIGS. 3 and 4, the overload interruption part 31 according to the second embodiment is disposed in a transmission rod 32 at a predetermined position between the opposite ends of the transmission rod 32. One end of the transmission rod 32 is rotatably connected to the output bracket 11 via a support shaft 32a. The other end of the transmission rod 32 is rotatably connected to the open-close lever 4 via a support shaft 32b. The overload interruption part 31 according to the second embodiment includes a magnet 31a and a magnetically-attracted part 31b. The magnet 31a is attached to one end of the motor-side rod 32M that faces one end of the lever-side rod 32L. The magnetically-attracted part 31b is attached to the one end of the lever-side rod 32L that faces the one end of the motor-side rod 32M. In this embodiment, the magnet 31a is a permanent magnet. The magnetically-attracted part 31b is an iron plate (ferromagnetic material). The magnet 31a and the magnetically-attracted part 31b are maintained by a guide part 31c such that the magnet 31a and the magnetically-attracted part 31b are slidable along an axial direction of the transmission rod 32. The position of the magnet 31a and the position of the magnetically-attracted part 31b may replace each other.

As illustrated in FIG. 3, when the overload F is not applied to the transmission rod 32, the magnet 31a is attracted to the magnetically-attracted part 31b at a certain magnetic attraction. This forms the power transmission path P, in other words, the power transmission path P has the transmission rod 32. The rotation output of the stepping motor 10 is transmitted to the open-close lever 4 via the power transmission path P. Accordingly, the open-close lever 4 is rotated between the fully-opened position and the fully-closed position.

In contrast, FIG. 4 illustrates a situation where the open-close lever 4 is in contact with the full-open stopper 7 and cannot further rotate in the open direction. In this situation, when the stepping motor 10 further rotates in the open direction, the overload F is applied to the transmission rod 32. This causes the magnet 31a to be separated from the magnetically-attracted part 31b under the overload F against the magnetic attraction. This separation between the magnet 31a and the magnetically-attracted part 31b in the axial direction interrupts the overload F.

Accordingly, in the second embodiment, the magnetic attraction of the magnet 31a corresponds to the predetermined load that serves as the reference load for blocking the power transmission path P. The predetermined load for the blocking is set to a load that prevents the loss of synchronism of the stepping motor 10. The embodiment adopts the magnet 31a that satisfies this magnetic attraction condition. When the axial load applied to the transmission rod 32 is greater than the predetermined load, in other words, the overload F is applied to the transmission rod 32, the magnet 31a is separated from the magnetically-attracted part 31b to block the power transmission path P. Accordingly, even if the stepping motor 10 further rotates toward the open side, the stepping motor 10 does not cause the loss of synchronism.

The stepping motor 10 is rotated in the direction B (close side) by the release of the accelerator pedal 2. The motor-side rod 32M relatively moves toward the close side to cause the magnet 31a to be attracted to the magnetically-attracted part 31b. This allows the automatic restoration of the overload interruption part 31 to its original state. Along with the automatic restoration of the overload interruption part 31, the open-close lever 4 is returned to the close position by the spring force of the spring (not illustrated).

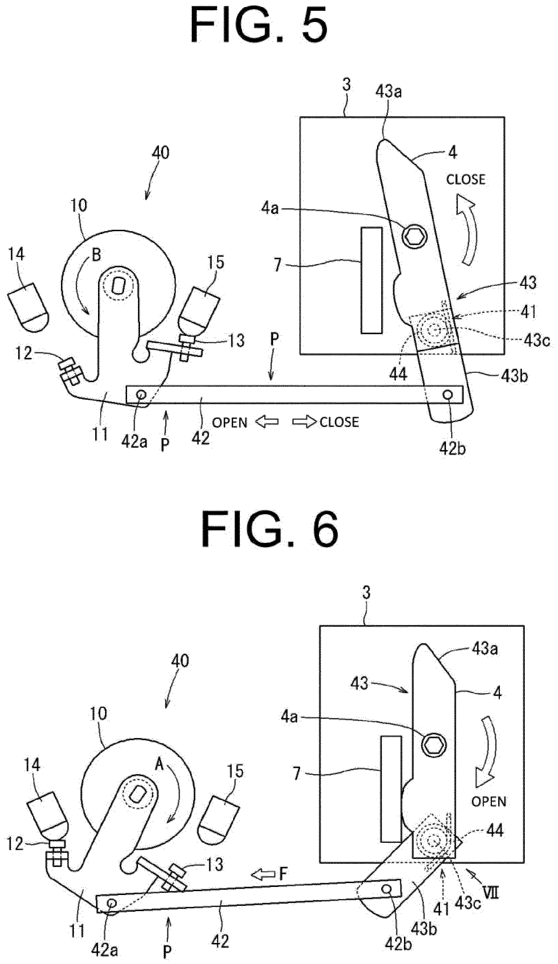

FIGS. 5 and 6 illustrate an accelerator device 40 according to a third embodiment. The third embodiment adopts a torsion-spring overload interruption part 41 instead of the extension-spring overload interruption part 21 of the first embodiment and the magnetic overload interruption part 31 of the second embodiment. The same numerical references are used for members and configurations that are not modified from the first embodiment or the second embodiment, and the explanation of such members and configurations will be omitted.

As illustrated in FIGS. 5 and 6, the accelerator device 40 according to the third embodiment includes a transmission rod 42 that is formed of a single rod. Similar to the first embodiment and the second embodiment, one end of the transmission rod 42 adjacent to the stepping motor 10 is rotatably connected to the output bracket 11 via a support shaft 42a. The other end of the transmission rod 42 adjacent to an open-close lever 43 is rotatably connected to the open-close lever 43 via a support shaft 42b.

In the third embodiment, the open-close lever 43 includes an overload interruption part 41. The open-close lever 43 has a proximal end 43a and a distal end 43b. The proximal end 43a is rotatably supported by the injection pump 3 via the lever shaft 4a. The transmission rod 42 is rotatably connected to the distal end 43b via the support shaft 42b.

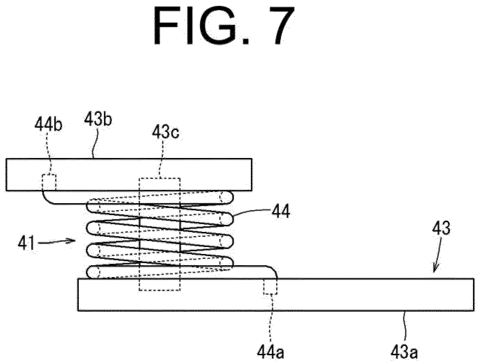

As illustrated in FIG. 7, the proximal end 43a and the distal end 43b are rotatably connected to each other via a connecting shaft 43c. The distal end 43b rotates (bends) in the clockwise direction around the connecting shaft 43c relative to the proximal end 43a as illustrated in FIG. 6 from the initial position of the distal end 43b that is on a straight line to the proximal end 43a in FIG. 5. The distal end 43b is prevented by a stopper (not illustrated) from rotating in the counterclockwise direction from the initial position.

As illustrated in FIG. 7, a single torsion spring 44 surrounds the connecting shaft 43c. One end 44a of the torsion spring 44 is placed in the proximal end 43a. The other end 44b of the torsion spring 44 is placed in the distal end 43b. The proximal end 43a and the distal end 43b are each urged by the torsion spring 44 toward their initial positions on the straight line.

In a state where the proximal end 43a and the distal end 43b of the open-close lever 43 are located on their initial positions on the straight line as illustrated in FIG. 5, the rotation output of the stepping motor 10 is transmitted to the open-close lever 43 via the power transmission path P. When the overload F is applied to the power transmission path P as illustrated in FIG. 6, the distal end 43b rotates in a bend direction relative to the proximal end 43a under the overload F against the elastomeric force of the torsion spring 44. This interrupts the overload F.

Accordingly, in the third embodiment, the elastomeric force of the torsion spring 44 corresponds to the predetermined load that serves as the reference load for blocking the power transmission path P. The predetermined load for the blocking is set to a load that prevents the loss of synchronism of the stepping motor 10. The embodiment adopts the torsion spring 44 that satisfies this elastomeric force condition. The bending (plastic deformation) of the open-close lever 43 at the overload interruption part 41 (deformation portion) absorbs the overload F.

Accordingly, the overload interruption part 41 of the third embodiment interrupts the overload F applied to the power transmission path P. This prevents the loss of synchronism of the stepping motor 10 even if the stepping motor 10 further rotates toward the open side in a situation where the open-close lever 43 is in contact with the full-open stopper 7 and cannot further rotate in the open direction.

The stepping motor 10 is rotated in the direction B (close side) by the release of the accelerator pedal 2. Accordingly, the elastomeric force of the torsion spring 44 (return member) returns the distal end 43b of the open-close lever 43 to the initial position that is on the straight line to the proximal end 43a as illustrated in FIG. 5. This allows the automatic restoration of the overload interruption part 41 to its original state as illustrated in FIG. 5. Along with the automatic restoration of the overload interruption part 41, the open-close lever 43 is returned to the close position by the spring force.

The aforementioned embodiments can be further modified. For example, the overload interruption part 21 is disposed at a certain single position in the transmission rod 20 in the first embodiment, but may be disposed at multiple positions. The same is true for the overload interruption part 31 disposed in the transmission rod 32 in the second embodiment.

Alternatively, the overload interruption parts 21, 31, 41 respectively according to the first, second, and third embodiments may be combined with each other in the power transmission path P.

An accelerator device (1, 30, 40) of a vehicle includes a stepping motor (10), an injection pump (3) for injecting fuel supplied to an engine (6), an open-close lever (4, 43) for adjusting an injection amount of the injection pump (3), a power transmission path (P) through which power is transmitted from the stepping motor (10) to the open-close lever (4, 43), and an overload interruption part (21, 31, 41) for interrupting an overload (F) to be applied to the stepping motor (10) via the power transmission path (P).

## Claims

1. An accelerator device (1, 30, 40) of a vehicle, comprising:
a stepping motor (10);
an injection pump (3) for injecting fuel supplied to an engine (6); and
an open-close lever (4, 43) for adjusting an injection amount of the injection pump (3), **characterized in that**
the accelerator device (1, 30, 40) further comprises:
a power transmission path (P) through which power is transmitted from the stepping motor (10) to the open-close lever (4, 43); and
an overload interruption part (21, 31, 41) for interrupting an overload (F) to be applied to the stepping motor (10) via the power transmission path (P).

2. The accelerator device (1, 30) according to claim 1, **characterized in that**
the power transmission path (P) has a transmission rod (20, 32), and the transmission rod (20, 32) includes the overload interruption part (21, 31).

3. The accelerator device (1) according to claim 1 or 2, **characterized in that**
the overload interruption part (21) includes an elastic member (21a) that is deformable under the overload (F) to block the power transmission path (P).

4. The accelerator device (30) according to claim 1 or 2, **characterized in that**
the overload interruption part (31) includes a magnet (31a) that is separated from a magnetically-attracted part (31b) to block the power transmission path (P) under the overload (F).

5. The accelerator device (40) according to claim 1 or 2, **characterized in that**
the overload interruption part (41) includes a deformation portion (41) that is plastically deformable under the overload (F) to block the power transmission path (P).

6. The accelerator device (40) according to claim 5, **characterized in that**
the open-close lever (43) includes the deformation portion (41).

7. The accelerator device (40) according to claim 5 or 6, **characterized in that**
the accelerator device (40) includes a return member (44) that restores the plastically deformed deformation portion (41) to an original state of the deformation portion (41).
